# FASCICULE DE BREVET EUROPEEN

(11) **EP 1 885 500 B1**
(45) Date de publication et mention de la délivrance du brevet: **19.08.2009**
(21) Numéro de dépôt: 05749292.8
(22) Date de dépôt: 03.06.2005
(51) Int. Cl.: B02B 3/00, B02B 3/12

(54) **PROCEDE D'OBTENTION DE GRAINS DE PLANTES MONOCOTYLEDONES DESTINES A L'ALIMENTATION HUMAINE OU ANIMALE**
VERFAHREN ZUM ERHALTEN VON EINKEIMBLÄTTRIGEN PFLANZENSAATKÖRPERN FÜR NAHRUNGSMITTEL FÜR MENSCHEN UND TIERE
METHOD FOR OBTAINING MONOCOTYLEDON PLANT GRAINS FOR HUMAN OR ANIMAL FOOD

(43) Date de publication de la demande: 13.02.2008
(73) Titulaire: Epigrain, 11150 Bram (FR)
(72) Inventeur: ABECASSIS, Joël, F-34920 Le Cres (FR); BOUNIOL, Alexandre, F-48190 Bagnols les Bains (FR); CHAURAND, Marc, F-34980 Montferrier (FR)
(74) Mandataire: Tetaz, Franck Claude Edouard
(86) Numéro de dépôt international: PCT/EP2005/052574
(87) Numéro de publication internationale: WO 2006/128499

(56) Documents cités:
- EP-A- 0 073 179
- FR-A- 2 862 891
- US-B1- 6 387 435
- MASKAN M: "Effect of maturation and processing on water uptake characteristics of wheat" JOURNAL OF FOOD ENGINEERING, BARKING, ESSEX, GB, vol. 47, 2001, pages 51-57, XP002297483 ISSN: 0260-8774

## Description

La présente invention concerne un procédé de fabrication d'un produit destiné à l'alimentation humaine ou animale à partir de plantes monocotylédones, notamment de blé.

Dans le domaine des produits alimentaires à base de graminées, outre le riz et les pâtés obtenues à partir de semoule de blé dur, on connaît bien des grains de blé ordinaire non cuit, du blé soufflé enrobé de sucre caramélisé ou bien encore le pil-pit ou le boulghour qui consistent dans des grains de blé dur concassés.

Afin de permettre une plus grande diversité de produits féculents susceptibles d'accompagner des plats de viande ou de poisson ou d'entrer dans la composition de desserts ou d'entrées telles que des salades ou analogues, on a déjà imaginé des procédés de fabrication de grains de blé dur précuits et décortiqués aptes à être cuits dans une eau portée à ébullition pendant environ 10 minutes.

C'est le cas, par exemple, du brevet européen EP 0561092 qui décrit un procédé de fabrication en continu d'un produit destiné à l'alimentation humaine. Le procédé consiste à sélectionner comme matière première des grains de blé dur que l'on soumet, après nettoyage et calibrage, à un traitement d'hydratation afin de permettre la gélatinisation de l'amidon contenue dans les grains puis les grains sont cuits pour accélérer la migration de l'eau jusqu'au coeur du grain. Les grains sont alors séchés, refroidis puis décortiqués mécaniquement avant de subir un traitement provoquant leur expansion qui augmente la porosité des grains de blé et qui rend lesdits grains non collant. Les grains de blé obtenus suivant ce procédé présentent un taux d'humidité de 12 à 13%, le taux d'humidité des grains croissant lors de leur cuisson dans de l'eau bouillante, et une teneur maximale en oligo-éléments de 33,5 de calcium, de 37,8 de magnésium et de 3,08 de fer, les valeurs sus-mentionnées étant exprimées en en mg pour 100g. Par ailleurs, les grains de blé présentent après cuisson un léger goût de noisette et de son.

Ce produit alimentaire, bien que présentant des teneurs en oligo-éléments supérieures aux autres féculents tels que les pâtes et le riz ainsi que des caractéristiques organoleptiques particulières, présente l'inconvénient de nécessiter un temps de cuisson d'au moins 10 minutes qui est plus long que celui des pâtes et du riz. De plus, lors de son procédé de fabrication, ces grains de blé perdent leurs germes et leurs enveloppes qui renferment des éléments nutritifs importants.

Maskan (J.Food Eng.47 (2001),51-57 décrit l'étude de l'absorption d'eau par des grains de blé.

L'un des buts de l'invention est donc de remédier à ces inconvénients et de proposer un nouveau produit destiné à l'alimentation humaine présentant de meilleures teneurs en oligo-éléments et en fibres, une meilleure bio-disponibilité des minéraux et une facilité de préparation en raison de sa teneur en eau.

A cet effet et conformément à l'invention, il est proposé un procédé d'obtention de grains de blé , remarquable en ce qu'il comprend au moins les étapes suivantes de récolte des graminées dans un état immature, puis de séparation des grains, puis de retrait des glumes et/ou des glumelles des grains sans séchage ni torréfaction afin d'obtenir des grains immatures, crus et entiers, sensiblement sans glumes et/ou glumelles.

On entend par « sensiblement sans glumes et/ou glumelles » un taux de glumes inférieur à 15 pou 1000.

Les grains de blé dur, compte tenu de leur état immature, présentent une couleur verte.

On comprend bien que le produit alimentaire obtenu suivant l'invention est prêt à être consommé soit froid de la même manière que du mais par exemple soit chaud après une cuisson de quelques secondes dans un four à micro-ondes ou de 2-3 minutes sur un feu doux.

Les grains sont récoltés lorsque leur taux d'humidité est compris entre 70 % et 50 %. Les grains de blés ainsi récoltés présentent à l'issue du procédé une couleur verte avec un indice de vert (100-a) compris entre 92 et 120, et une luminance (L) comprise entre 50 et 65.

Les grains immatures présentent une teneur en fibres totales comprise entre 12 et 20% et ils présentent un indice de vert (100-a) compris entre 95 et 120, et une luminence (L) comprise entre 50 et 65.

Par ailleurs, les grains présentent une teneur en acide phytique comprise entre 2 et 3,2 mg/g et une teneur en acide férulique comprise entre 1800 et 2600 µg/g. De plus, le rapport potassium/phosphore est supérieur à 1.

La composition alimentaire comprenant des grains obtenus selon l'invention peut consister dans tout plat dit cuisiné dans lequel les grains suivant l'invention forment un ingrédient ou dans toute transformation avec ou sans additif des grains sous forme de jus, de purée, de soupe, de pâte, de sauce, de compote, etc...

Il est décrit aussi un procédé de retrait d'une ou plusieurs enveloppes entourant une matière végétale à traiter comprenant au moins les étapes suivantes d'introduction de la matière végétale à traiter dans au moins un fluide, puis de projection du fluide mélangé à ladite matière végétale à traiter sur une plaque, l'impact provoquant le retrait de la ou des enveloppes entourant la matière végétale.

Enfin, il est décrit un dispositif pour le retrait d'une ou plusieurs enveloppes entourant une matière végétale comprenant au moins des moyens de formation d'au moins un flux de fluide, des moyens d'introduction des produits dans le flux de fluide et une plaque sur laquelle est projetée le flux de fluide transportant les produits.

Par matière végétale à traiter, on entend toute matière végétale entourée d'une enveloppe telle, tiges, fruits, graines, amandes. Le traitement selon l'invention permet de retirer une ou plusieurs enveloppes externes entourant ladite matière végétale, comme la peau d'un fruit, les glumes ou glumelles de grains de plantes monocotylédones ou encore le péricarpe entourant certains tissus, tout en conservant de manière substantielle l'intégrité de la matière végétale restant après traitement. De manière avantageuse, cette matière végétale est choisie parmi les fruits, légumes, les grains, et plus particulièrement les grains de plantes monocotylédones. Le procédé selon l'invention est plus particulièrement adapté au traitement des tissus végétaux immatures.

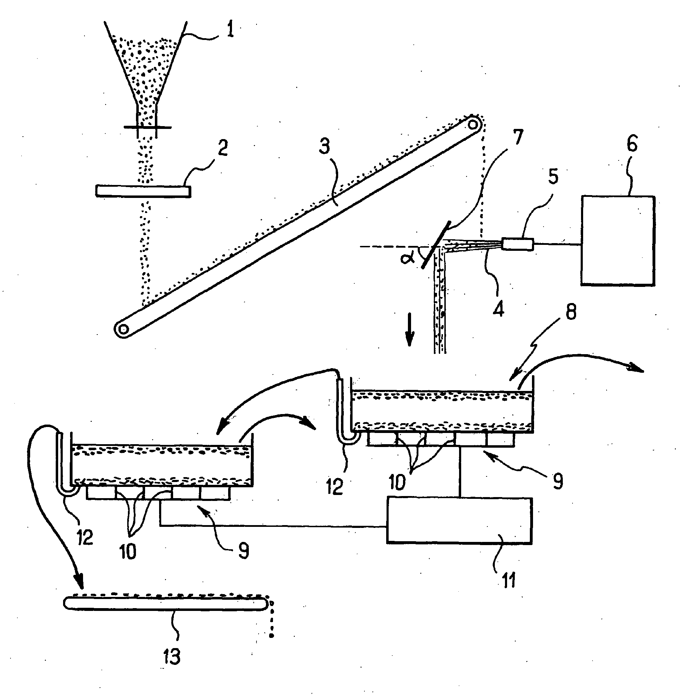

D'autres avantages et caractéristiques du procédé selon l'invention ressortiront mieux de la description de plusieurs variantes d'exécution donnés à titre d'exemples non limitatifs. La figure unique représente de manière schématique le dispositif de retrait des enveloppes entourant une manière végétale à traiter.

On décrira, dans cet exemple non limitatif un procédé de fabrication de grains de blé immatures prêts à être consommés ; toutefois, le procédé de fabrication suivant l'invention pourra être appliqué à toutes les poacées incluant les graminées telles que l'avoine, l'orge, etc... On entend par poacées des plantes herbacées gazonnantes ou à rhizomes comprenant une tige constituée d'une gaine et d'une limbe et dont l'inflorescence composée d'épillets groupés se développe à l'intérieur de la gaine la plus haute.

Le procédé de fabrication de grains de blé immatures comprend une première étape de récolte du blé dans un état immature, c'est-à-dire un état dans lequel les grains de blé sont verts et dans lequel les sucres de l'albumen ne sont pas encore totalement transformés en amidon et présentent généralement un aspect laiteux ou pâteux, et de séparation des grains. La récolte des grains de blé immatures, est effectuée au moyen d'une machine agricole comprenant une barre de coupe spécifique lorsque le taux d'humidité des grains de blé est compris entre 70% et 50%, et de préférence lorsque le taux d'humidité est compris entre 63% et 52%, de manière à ce que le produit fini présente une couleur verte avec un indice de vert (100-a) compris entre 95 et 120 et une luminance (L) comprise entre 50 et 65 comme il sera détaillé plus loin. Plus précisément, la récolte des graines de blé est effectuée avant que la teneur en raffinose, exprimée en pourcentage de matière sèche, n'atteigne 0,4%. On observera, à titre indicatif que la teneur en raffinose du blé mature est de l'ordre de 1,2%. De plus, au cours de la maturité des graines de blé, les teneurs en sucre, fructose, glucose et maltose et la teneur en acides gras libres décroissent.

II va de soi que les teneurs en raffinose, fructose, glucose, etc... dépendent, outre de la variété des graminées, de la somme des températures moyennes journalières depuis l'épiaison des graminées.

La barre de coupe spécifique comprend un cylindre solidaire d'un bâti monté sur un essieu muni de dents radiales obtenues dans une matière résiliente telle que le caoutchouc par exemple, et qui est entraîné en rotation dans le sens inverse de l'avancement de la machine. L'emploi de cette barre de coupe spécifique permet ainsi de récolter et d'égrener les grains de blé immatures qui sont particulièrement fragiles compte tenu de leur teneur en eau élevée due à leur immaturité.

La récolte des grains de blé immatures peut être effectuée au moyen d'une moissonneuse batteuse traditionnelle. En cas d'utilisation de la moissonneuse batteuse pour la récolte, la barre de coupe de la moissonneuse doit être réglée à une hauteur prédéterminée de manière à obtenir des épis entiers qui sont récupérés au moyen d'un tapis pour, subir un battage ultérieur afin d'égrener les grains de blé immatures.

Compte tenu de la fragilité des grains de blé immature, les grains de blé récoltés sont de préférence placés dans une atmosphère inerte afin de limiter leur oxydation susceptible de dénaturer les qualités organoleptiques des grains de blé. Les grains de blé sont ainsi placés dans une benne de récolte et mélangés avec des blocs de glace carbonique, puis recouverts d'une bâche. La glace carbonique se sublime en gaz carbonique qui reste piégé sous la bâche maintenant ainsi les grains de blé dans une atmosphère inerte.

Ces grains de blé sont soit congelés puis stockés avant leur traitement ultérieur soit traités après leur récolte pour retirer leurs glumes et/ou glumelles.

En référence à la figure unique, le dispositif pour retirer les glumes et/ou les glumelles est constitué d'une trémie 1 dans laquelle sont placés les grains de blé immatures récoltés, ou bien les grains de blé immatures congelés, d'un trieur/séparateur 2 placés sous la trémie 1 et d'un tapis de convoyage 3 placé sous le trieur/séparateur 2, les grains de blé tombant sur le tapis de convoyage 3 à leur sortie du trieur/séparateur. A l'extrémité du tapis de convoyage 3, les grains de blé tombent sous l'effet de la pesanteur dans un jet d'eau 4 obtenu au moyen d'une buse 5 alimentée par une source d'eau sous pression 6. La source d'eau sous pression 6 et la buse 5 délivrent un jet d'eau à une pression comprise entre 50 et 200 bars. Les grains de blé se mélangent au jet d'eau 4 dirigé contre une plaque rigide 7 inclinée par rapport à l'axe du jet d'eau 4 suivant un angle α compris entre 40 et 50°, et de préférence égal à 45°. L'angle α peut avantageusement être varié suivant une valeur quelconque en fonction de la pression du jet d'eau notamment, la plaque 7 étant montée sur une articulation par exemple.

II va de soi que le dispositif peut comprendre plusieurs jets d'eau 4 dirigés vers une ou plusieurs plaques 7.

Lors de l'impact du jet d'eau 4 dans lequel sont mélangés les grains de blé, les glumes et/ou les glumelles se détachent des grains de blé. L'eau, les grains de blé et les glumes et/ou les glumelles tombent alors dans un bac de décantation 8 placé sous la plaque 7 et muni de moyens d'agitation 9. Ces moyens d'agitation 9 consistent en des jets 10 d'eau mélangée à de l'air débouchant dans le fond du bac de décantation 8. Ces jets d'eau et d'air 10 sont alimentés par une source 11. Les grains de blé étant plus denses que les glumes et/ou les glumelles, ils tombent au fond du bac de décantation 8 et sont retirés de ce dernier par un système d'extraction à venturi 12. Les glumes et/ou les glumelles restent quant à elles à la surface du bac de décantation et sont retirés su bac de décantation par déversement par exemple. Les grains de blé sont éventuellement transportés par tous moyens appropriés dans un second bac de décantation 8' comprenant également des moyens d'agitation 9' et un système d'extraction à venturi 12 des grains de blé identiques au premier bac de décantation 8.

Il va de soi que les grains de blé sont plongés successivement dans plusieurs bacs de décantation 8, 8' jusqu'à ce que toutes les glumes et/ou les glumelles soient sensiblement extraites. On entend par sensiblement extraite, un taux de glume et/ou de glumelles présente sur les grains de blé inférieur à 15 pour 1000.

Les grains de blé sont alors placés sur une table vibrant 13 pour égoutter les grains de blé avant la suite de leur traitement

Ainsi, le procédé de retrait des glumes et/ou des glumelles consiste au moins dans les étapes suivantes d'introduction des grains de blé immature dans au moins un fluide, puis de projection du fluide sur une plaque, l'impact des grains de blé mélangés au fluide provoquant le retrait des glumes et/ou des glumelles entourant les grains de blé.

Les produits sont de référence introduits dans un jet d'eau qui présente une pression comprise entre 50 et 200 bars.

Il est bien évident que les grains de blé peuvent être introduit dans un ou plusieurs flux d'un fluide quelconque, tel que de l'air par exemple.

Après l'impact sur la plaque des grains de blé mélangés à l'eau, le mélange d'eau de grains de blé et de glumes et/ou de glumelles est récupéré dans au moins un bain de décantation pour séparer les glumes et/ou les glumelles des grains de blé. Les grains de blé sont alors retirés du bain puis égouttés, ledit égouttage étant de préférence obtenu par agitation desdits grains de blé.

On observera que, suivant le procédé, les glumes et les glumelles des grains de blé sont retirées en limitant l'altération du péricarpe et de la structure du grain.

Il est bien évident que le retrait des glumes et/ou des glumelles des grains de blé peut être obtenu par tout moyen équivalent tel que par une action mécanique appropriée de battage et/ou de friction, et/ou d'abrasion par voie sèche et/ou humide.

Par ailleurs, on observera que le procédé de retrait des glumes et/ou des glumelles des grains de blé immature peut être étendu au retrait de l'enveloppe de toute matière végétale à traiter tels que des fruits et/ou des légumes et/ou similaires.

Les glumes et/ou les glumelles des grains de blé étant retirées, lesdits grains de blé immatures crus sont alors cuits par un procédé de cuisson hydro-thermique dans une atmosphère comprenant de la vapeur d'eau à une température comprise entre 70 et 200°C pendant une ou plusieurs phases allant de 10 à 120 minutes.

Il est bien évident que les grains de blé peuvent être soumis à un ou plusieurs traitements thermiques par tout moyen approprié tel que des micro-ondes sans pour autant sortir du cadre de l'invention.

Après ce ou ces traitements thermiques, les grains de blé sont conditionnés dans des conserves métalliques et/ou des emballages souples en polyoléfines ou analogues.

Accessoirement, de la saumure est mélangée avec les grains de blé préalablement à leur conditionnement

Les grains de blé ainsi obtenus sont susceptibles d'être consommés soit froids de la même manière que du maïs par exemple, soit chauds après une cuisson de quelques secondes dans un four à micro-ondes ou de 2-3 minutes sur un feu doux, et ils présentent les caractéristiques suivantes:
• Caractéristiques Physiques après égouttage :
- Calibrage : compris entre 2 et 5 mm, et de préférence compris entre 2 et 4 mm
- Poids de 1000 grains : compris entre 10 et 75 g et de préférence compris entre 20 et 40 g.
- Humidité : comprise entre 65 et 75% et de préférence comprise entre 67 et 74%
- Teneur en protéines : 12% ± 3%
- Teneur en fibres totales (solubles et insolubles) : comprise entre 12 et 20% et plus particulièrement entre 15 et 18% de la matière sèche
- Couleur (norme Lab CIE 1976) :

| | |
|---|---|
| • Luminence (L) | Comprise entre 5 0 et 65 |
| • Indice de vert (100a) | Compris entre 95 et 120 |

La couleur a été ici mesurée en utilisant un spectro-colorimètre utilisant un faisceau incident normal à l'échantillon avec réflexion diffuse de type Minolta CR-310.

### • Caractéristiques biochimiques :

| Acides aminés (% m. s) | |
|---|---|
| Acide aspartigue | 5.9 |
| Thréonine | 3.1 |
| Serine | 4.0 |
| Acide glutamique | 26.1 |
| Proline | 9.7 |
| Glycine | 3.3 |
| Alanine | 4.5 |
| Valine | 4.9 |
| Isoleucine | 3.5 |
| Leucine | 6.8 |
| Tyrosine | 2.8 |
| Phénylalanine | 4.2 |
| Histidine | 4.4 |
| Lysine | 5.0 |
| Arginine | 5.9 |
| Cystéine | 2.0 |
| Mé4hionine | 1.6 |
| Tryptophane | 1.1 |
| Teneur en azote totale (% m.s) | 1.8 |
| Teneur en sucres réducteurs (% m.s) | Comprise entre 1.5 et 4.5 |
| Fructose {% m.s) | Comprise entre 0.74 et 1.21 |
| Sucrose (% m.s) | Comprise entre 0.82 et 0.82 |
| Gluoose (% m.s) | Comprise entre 0.57 et 0.71 |
| Raffinose (% ms) | Comprise entre 0 et 0.4 |
| Maltose (% m.s) | Comprise entre 0.10 et 0.17 |
| Ribose (% m. s) | Comprise entre 0.01 et 0.03 |
| Sucres non réducteurs (mg/grain) | Comprise entre 0.54 et 0.60 |
| Pentosanes (% ms) | Comprise entre 32 et 3.7 |
| Fructanes (% m.s) | 18.4 |
| Amidon (% m.s) | 60.0 |
| Répartition amidon | 20 à 30 µm |
| Arnylose {% m.s) | Comprise entre 16.64 et 20.90 |
| Amylopectine (%) | Comprise entre 79.10 et 83.36 |
| Ratio Amylose 1 Amylopectine | Comprise entre 1/3.8 et 1/5 |
| Activité α-emylasique (U.Ug) | 3.86 |
| Lipides totaux (% m.s) | Comprise entre 2.87 et 3.34 |
| Stérols (mg/g) | Comprise entre 31 et 52 |
| Monoglycérides (mg/g) | Comprise entre 18 et 31 |
| 1.2 Dyglycérides (mg/g) | Comprise entre 112 et 115 |
| 1,3 Dyglycérides (mg/g) | Comprise entre 109 et 116 |
| Tryglycérides (mg/g | Comprise entre 201 et 558 |
| Phosphatidyl Ethanolamine (mg/g) | Traces |
| Phosphatidyl Sérine (mg/g) | Traces |
| Lécithine (mg/g) | Comprise entre 0.38 et 0.50 |
| Monogalactosyl Diglycérides (mg/g) | 0.94 |
| Magnésium (mg/100g) | Comprise entre 106.6 (+/-16) et 115.6 (+/-10) |
| Calcium (mg/100g) | Comprise entre 56.7 (+/-4) et 59.9 (+/-4) |
| Fer (mg/100g) | Comprise entre 2.S (+/-02) et 3.3 (+/-02) |
| Znc(mg/100g) | Comprise entre 4.0 (+/-0.4) et 4.1 (+/-0.3) |
| Cuivre (µg/100g) | Comprise entre 587.1 (+/40) et 599.5 (+1-50) |
| Potassium (mg/100g) | Comprise entre 616 (+/-52) et 646 (+/-34) |
| Phosphore (mg/100g) | Comprise entre 376 (+/-116) et 400 (+1-30) |

On observera que le rapport potassium/phosphore est supérieur à 1 indiquant que l'assimilation par l'organisme humain est bonne.

| | |
|---|---|
| Teneur en acide | phytique : 2,8 mg/g |
| Teneur en acide | férufique: 2200µg/g |

On notera, par ailleurs, que la teneur en acides phytiques des grains de blé ainsi obtenus est particulièrement faible procurant ainsi une bonne biodisponibilité, alors que la teneur en acide férulique garanti un pouvoir anti-oxydanl

De plus, on observera que le produit obtenu selon le procédé présente une teneur en acides phytiques ou phytates inférieure à la teneur desdits acides dans des grains de blé matures améliorant sensiblement la biodisponibilité des minéraux tels que le Fer ou le Zinc. La teneur en lysine, qui est un acide aminé indispensable à l'Homme, est supérieure à la teneur en Lysine de grains de blé matures et, compte tenu d'une teneur en amidon inférieure et d'une teneur en fructanes supérieure à la teneur des grains de blé matures, la teneur en fibres diététiques est supérieure à la teneur des grains de blé matures. Cette teneur élevée en fructanes indique une source de Fructodigosaccharides (FOS) qui présentent des fonctions pré-biotiques procurant une prolifération des bactéries bifidiques, et une réduction des bactéries novices, une protection des fonctions hépatiques, une réduction de la pression sanguine, un effet anti-cancérigène, etc... On entend par « prébiotiques » des composants qui sont fermentés par les propres bactéries intestinales du corps humain et qui ont ainsi un effet positif sur la composition de la flore intestinale.

II est bien évident que les valeurs rapportées ci-dessus peuvent varier d'une récolte à une autre, les parcelles sur lesquelles est cultivé le blé et les conditions climatiques rencontrées n'étant pas homogènes.

De plus, il est bien évident que ces grains de blé immature pourront entrer dans tout type de composition alimentaire, telle que des plats dit cuisinés dans lequels les grains suivant l'invention forment un ingrédient, ou dans toute transformation des grains, avec ou sans additif, sous forme de jus, de purée, de soupe, de pâte, de sauce, de compote, etc...

Selon une variante d'exécution du procédé conforme à l'invention, les grains de blé immature crus sans glumes sont séchés jusqu'à ce qu'ils présentent un taux d'humidité inférieur ou égal à 15%. A l'issue de ce séchage, les grains de blé séchés pourront être réduits sous la forme de semoule selon des procédés bien connus de l'homme de l'art pour procurer soit de la farine soit de la semoule susceptible d'entrer dans la composition de produits alimentaires tels que des pâtes, du couscous, etc...

Alternativement, les grains de blé séchés sont grillés et/ou torréfiés puis éventuellement décortiqués. Ces grains de blé immatures séchés et décortiqués pourront être alors cuits dans de l'eau bouillante, avec un temps de cuisson inférieur à 15 minutes, de la même manière que le produit alimentaire décrit dans le brevet européen EP 0561092. Ces grains de blés immatures séchés et décortiqués pourront également être concassés pour obtenir un produit similaire au « frekeh » également appelé « firik ».

Enfin, il va de soi que le procédé suivant l'invention peut être adapté à tous les types de plantes monocotylédones, notamment de poacées tels que l'avoine, l'orge, etc... et que les exemples que l'on vient de donner ne sont que des illustrations particulières en aucun cas limitatives quant aux domaines d'application de l'invention.

## Revendications

1. Procédé d'obtention de grains de blé, **caractérisé en ce qu'**il comprend au moins les étapes suivantes :
- de récolte des plantes dans un état immature lorsque le taux d'humidité des grains est compris entre 70 % et 50 % de manière à ce que le produit fini présente une couleur verte avec un indice de vert (100-a) compris entre 92 et 120, et une luminance (L) comprise entre 50 et 65.
- de séparation des grains, puis
- de retrait des glumes et/ou des glumelles des grains sans séchage ni torréfaction afin d'obtenir des grains immatures, crus et entiers, sensiblement sans glumes et/ou glumelles.

2. Procédé suivant la revendication 1 **caractérisé en ce que** la récolte des plantes est effectuée lorsque le taux d'humidité des grains est compris entre 63% et 52%.

3. Procédé suivant l'une quelconque des revendications 1 à 2 **caractérisé en ce que** les grains immatures crus sans glumes sont cuits.

4. Procédé suivant la revendication 3 **caractérisé en ce que** les grains immatures sont cuits par un procédé de cuisson hydro-thermique.

5. Procédé suivant la revendication 4 **caractérisé en ce que** les grains immatures sont cuits dans une atmosphère comprenant de la vapeur d'eau à une température comprise entre 70 et 200°C pendant une ou plusieurs phases allant de 10 à 120 minutes.

6. Procédé suivant la revendication 5 **caractérisé en ce que** les grains immatures sont cuits jusqu'à ce qu'ils présentent un taux d'humidité supérieur ou égal à 50%.

7. Procédé suivant la revendication 6 **caractérisé en ce que** les grains immatures sont cuits jusqu'à ce qu'ils présentent un taux d'humidité compris entre 65 et 75%.

8. Procédé suivant l'une quelconque des revendications 1 à 7 **caractérisé en ce que**, préalablement au conditionnement des grains, ces derniers sont mélangés à une saumure.

9. Procédé suivant l'une quelconque des revendications 1 à 2 **caractérisé en ce que** les grains immatures crus sans glumes sont séchés.

10. Procédé suivant la revendication 9 **caractérisé en ce que** les grains immatures crus sans glumes sont séchés jusqu'à ce qu'ils présentent un taux d'humidité inférieur ou égal à 15%

11. Procédé suivant l'une quelconque des revendications 9 ou 10 **caractérisé en ce que** les grains séchés sont grillés et/ou torréfiés.

12. Procédé suivant l'une quelconque des revendications 1 à 11 **caractérisé en ce que** le retrait des glumes et/ou des glumelles est obtenu en introduisant les grains dans au moins un fluide projeté sur au moins une plaque.

13. Procédé suivant la revendication 12 **caractérisé en ce que** les grains sont introduits dans un jet d'eau à haute pression.

14. Procédé suivant la revendication 13 **caractérisé en ce que** le jet d'eau présente une pression comprise entre 50 et 200 bars.

15. Procédé suivant l'une quelconque des revendications 13 ou 14 **caractérisé en ce que** les grains et les glumes et/ou les glumelles qui se sont détachées desdits grains sont récupérés dans un premier bain de décantation dans lequel l'eau est agitée pour séparer les grains des glumes et/ou des glumelles.

16. Procédé suivant la revendication 15 **caractérisé en ce que** les grains sont retirés du bain de décantation puis agités pour retirer l'eau.

## Claims

1. A process for obtaining wheat grains, **characterised in that** it comprises at least the following steps:
- harvesting plants in an immature state when the humidity rate of the grains is between 70 % and 50 % so that the finished product has a green colour with a green index (100-a) between 92 and 120, and a luminance (L) between 50 and 65,
- separating the grains, then
- removing the glumes and/or husks from the grains without drying or roasting to obtain immature grains, raw and whole, substantially free of glumes and/or husks.

2. The process as claimed in the preceding claim, **characterised in that** the plants are harvested when the humidity rate of the grains is between 63% and 52%.

3. The process as claimed in any one of Claims 1 to 2, **characterised in that** the raw immature grains without glumes are cooked.

4. The process as claimed in Claim 3, **characterised in that** the immature grains are cooked by a process of hydrothermal cooking.

5. The process as claimed in Claim 4, **characterised in that** the immature grains are cooked in an atmosphere comprising water vapour at a temperature between 70 and 200°C for one or more phases ranging from 10 to 120 minutes.

6. The process as claimed in Claim 5, **characterised in that** the immature grains are cooked until they exhibit a humidity rate greater than or equal to 50%.

7. The process as claimed in Claim 6, **characterised in that** the immature grains are cooked until they exhibit a humidity rate between 65 and 75%.

8. The process as claimed in any one of Claims 1 to 7, **characterised in that**, prior to conditioning of the grains, the latter are mixed in brine.

9. The process as claimed in any one of Claims 1 to 2, **characterised in that** the raw immature grains without glumes are dried.

10. The process as claimed in Claim 9, **characterised in that** the raw immature grains without glumes are dried until they exhibit a humidity rate of less than or equal to 15%.

11. The process as claimed in any one of Claims 9 or 10, **characterised in that** the dried grains are grilled and/or roasted.

12. The process as claimed in any one of Claims 1 to 11, **characterised in that** the glumes and/or husks are removed by introducing the grains to at least one fluid projected onto at least one plate.

13. The process as claimed in Claim 12, **characterised in that** the grains are introduced to a water jet at high pressure.

14. The process as claimed in Claim 13, **characterised in that** the water jet has a pressure between 50 and 200 bars.

15. The process as claimed in any one of Claims 13 or 14, **characterised in that** the grains and the glumes and/or the husks which have detached from said grains are recovered in a first decanting bath in which the water is stirred to separate the grains from the glumes and/or the husks.

16. The process as claimed in Claim 15, **characterised in that** the grains are removed from the decanting bath then stirred to remove water.

## Patentansprüche

1. Verfahren zum Erhalten von Getreidekörnern, **dadurch gekennzeichnet, dass** es wenigstens die folgenden Schritte umfasst:
- Ernten von Pflanzen in einem unreifen Zustand, wenn der Feuchtigkeitsgehalt der Körner zwischen 70 % und 50 % ist, damit das Endprodukt eine grüne Farbe mit einem Grünindex (100-a) zwischen 92 und 120 und eine Luminanz (L) zwischen 50 und 65 aufweist.
- Trennen der Körner, dann
- Aussondern der Hüllspelzen und/oder der Deck- und Vorspelzen von den Körnern ohne Trocknen und ohne Rösten, um unreife, rohe und ganze Körner im Wesentlichen ohne Hüllspelzen und/oder Deck- und Vorspelzen zu erhalten.

2. Verfahren gemäß Anspruch 1, **dadurch gekennzeichnet, dass** das Ernten der Pflanzen durchgeführt wird, wenn der Feuchtigkeitsgehalt der Körner zwischen 63% und 52% ist.

3. Verfahren gemäß einem der Ansprüche 1 bis 2, **dadurch gekennzeichnet, dass** die unreifen, rohen Körner ohne Hüllspelzen gekocht werden.

4. Verfahren gemäß Anspruch 3, **dadurch gekennzeichnet, dass** die unreifen Körner durch ein hydrothermisches Kochverfahren gekocht werden.

5. Verfahren gemäß Anspruch 4, **dadurch gekennzeichnet, dass** die unreifen Körner in einer Atmosphäre gekocht werden, die Wasserdampf bei einer Temperatur zwischen 70 und 200°C umfasst, während einer oder mehrerer Phasen, die von 10 bis 120 Minuten gehen.

6. Verfahren gemäß Anspruch 5, **dadurch gekennzeichnet, dass** die unreifen Körner gekocht werden, bis sie einen Feuchtigkeitsgehalt größer oder gleich 50% aufweisen.

7. Verfahren gemäß Anspruch 6, **dadurch gekennzeichnet, dass** die unreifen Körner gekocht werden, bis sie einen Feuchtigkeitsgehalt zwischen 65 und 75% aufweisen.

8. Verfahren gemäß einem der Ansprüche 1 bis 7, **dadurch gekennzeichnet, dass** vor einer Verpackung der Körner diese letztgenannten mit einer Salzlake gemischt werden.

9. Verfahren gemäß einem der Ansprüche 1 bis 2, **dadurch gekennzeichnet, dass** die unreifen rohen Körner ohne Hüllspelzen getrocknet werden.

10. Verfahren gemäß Anspruch 9, **dadurch gekennzeichnet, dass** die unreifen rohen Körner ohne Hüllspelzen getrocknet werden, bis sie einen Feuchtigkeitsgehalt kleiner oder gleich 15% aufweisen.

11. Verfahren gemäß einem der Ansprüche 9 oder 10, **dadurch gekennzeichnet, dass** die getrockneten Körner gegrillt und/oder geröstet werden.

12. Verfahren gemäß einem der Ansprüche 1 bis 11, **dadurch gekennzeichnet, dass** das Aussondern der Hüllspelzen und/oder der Deck- und Vorspelzen erreicht wird, indem die Körner in wenigstens ein auf wenigstens eine Platte gespritztes Fluid eingeführt werden.

13. Verfahren gemäß Anspruch 12, **dadurch gekennzeichnet, dass** die Körner in einen Wasserstrahl mit hohem Druck eingeführt werden.

14. Verfahren gemäß Anspruch 13, **dadurch gekennzeichnet, dass** der Wasserstrahl einen Druck zwischen 50 und 200 Bar aufweist.

15. Verfahren gemäß einem der Ansprüche 13 oder 14, **dadurch gekennzeichnet, dass** die Körner und die Hüllspelzen und/oder die Deck- und Vorspelzen, die sich von Körnern abgelöst haben, in einem ersten Absetzbad gesammelt werden, in dem das Wasser bewegt wird, um die Körner von den Hüllspelzen und/oder den Deck- und Vorspelzen zu trennen.

16. Verfahren gemäß Anspruch 15, **dadurch gekennzeichnet, dass** die Körner aus dem Absetzbad ausgesondert werden, dann bewegt werden, um das Wasser auszusondern.
